# EUROPÄISCHE PATENTSCHRIFT

(11) **EP 0 784 367 B1**
(45) Veröffentlichungstag und Bekanntmachung des Hinweises auf die Patenterteilung: **13.12.2000**
(21) Anmeldenummer: 96402602.5
(22) Anmeldetag: 22.11.1996
(51) Int. Cl.: H02G 15/18, H02G 15/26, G02B 6/44, F16L 41/08, B29C 61/02

(54) **Anordnung zum Umhüllen einer Spleissverbindung**
Device for covering a splice connection
Dispositif servant à envelopper une connexion à épissure

(30) Priorität: 04.12.1995 DE 29519179 U
(43) Veröffentlichungstag der Anmeldung: 16.07.1997
(73) Patentinhaber: N.V. RAYCHEM S.A., B-3101 Kessel-Lo (BE)
(72) Erfinder: Freckmann, Hans-Holger, 30855 Langenhagen (DE); Schift, Rudolf, 31655 Stadthagen (DE)
(74) Vertreter: Jay, Anthony William

(56) Entgegenhaltungen:
- EP-A- 0 244 209
- DE-U- 29 511 390

## Beschreibung

Die Erfindung betrifft eine Anordnung zum Umhüllen einer Spleißverbindung nach dem Oberbegriff des Anspruchs 1.

Aus der EP-0 244 209 B1 ist eine Anordnung zum Umhüllen eines Substrates beispielsweise einer Spleißverbindung bekannt, die ein rückstellbares Gewebe, welches eine Öffnung aufweist, in welcher ein Ventil angeordnet ist sowie einen die Spleißverbindung umgebenden Kanister umfaßt. Der Kanister besitzt ebenfalls eine Öffnung, die als "ausgefranste Bohrung" ausgestaltet ist. Das Ventil besitzt wie an sich von Reifenventilen bekannt einen Ventilboden, zwischen dem und einer auf den Ventilschaft aufgeschraubten Mutter das Gewebe eingespannt ist. Der Ventilboden besitzt eine nach außen weisende Rippe, die beim Eindrücken des Ventilbodens in die "ausgefranste Bohrung" die Bohrung hintergreift und damit das Ventil mit dem Kanister verbindet.

Diese Technik ist sehr aufwendig, da spezielle Ventile verwendet werden müssen sowie die "ausgefranste Bohrung" hergestellt werden muß. Ein gravierender Nachteil besteht jedoch darin, daß die beim Eindrücken des Ventils in die Kanisterbohrung nach innen geformten Zacken der "ausgefransten Bohrung" zu einer Beschädigung der Isolierung der verspleißten Adern führen können.

Aus dem DE-U-295 11 390 ist eine Anordnung zum Umhüllen einer Spleißverbindung von elektrischen oder optischen Kabeln bekannt. Diese Anordnung besteht aus einem die Spleißverbindung umhüllenden Kanister sowie einer um den Kanister herumgeleglen wärmeschrumpfbaren Manschette. Die wärmeschrumpfbare Manschette und die Kanisterwand weisen fluchtende Öffnungen auf, in welche ein Ventil eingebaut ist. Das Ventil kann an seinem der Speißverbindung zugekehrten Ende einen Ansatz tragen, der im Innern des Kanisters befindlich ist. Gemäß einer anderen Ausführungsform jedoch entfällt der Ansatz, und das innere Ende des rohrförmigen Ventils ragt in die Öffnung in der Kanisterwand hinein, um eine Verschiebung der Manschette beim Wärmeschrumpfen zu vermeiden.

Der vorliegenden Erfindung liegt von daher die Aufgabe zugrunde, die bekannte Anordnung dahingehend zu verbessern, daß mit einfachen Mitteln erreicht wird, daß die Öffnung bzw. das Ventil in der Manschette mit der Öffnung im Kanister übereinanderliegen bzw. miteinander fluchten, und dieser Zustand auch nach dem Abkühlen der wärmegeschrumpften Manschette noch besteht. Darüber hinaus soll eine Beschädigung der Isolierschicht der Adern bzw. der Deckschicht der Lichtwellenleiter weitestgehend ausgeschlossen sein.

Diese Aufgabe wird durch die im Kennzeichen des Anspruchs 1 erfaßten Merkmal gelöst.

Mit Hilfe eines Dornes wird in verblüffend einfacher Weise sichergestellt, daß die Öffnung in der Manschette mit der Öffnung im Kanister fluchtet. Ein Verschieben der Öffnungen gegeneinander während des Schrumpfens aber auch während der Abkühlung ist völlig ausgeschlossen. Nach dem Abkühlen wird der Dorn entfernt und der Ventileinsatz wird eingeschraubt. Es versteht sich von selbst, daß der Dorn nicht zu lang ist und nicht zu tief in das Innere des Kanisters hineinragt. Es reicht im Normalfall völlig aus, daß er in die Öffnung im Kanister hineinragt.

Weitere vorteilhafte Ausgestaltungen sind in den Unteransprüchen erfaßt.

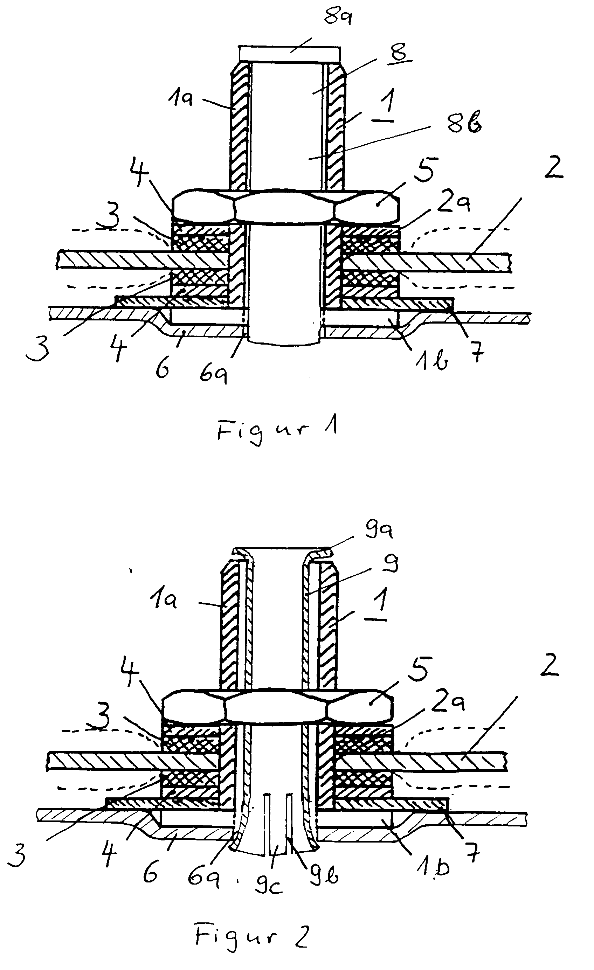

Die Erfindung ist an Hand der in den Figuren 1 und 2 schematisch dargestellten Ausführungsbeispiele näher erläutert.

In den Figuren 1 und 2 ist eine Anordnung dargestellt, bei welcher ein Ventil 1 in einer Öffnung 2a in einer Manschette 2 befestigt ist. Das Ventil besteht aus einem rohrförmigen Teil 1a und einem Anschlag 1b. Das rohrförmige Teil 1a - im nachfolgenden Ventilhülse genannt - besitzt ein Außen- und ein Innengewinde. Die Ventilhülse 1a ist durch die Öffnung 2a in der Manschette 2 hindurchgeführt. Die Manschette 2 besteht aus einem wärmerückstellbaren Kunststoffmaterial, in welchem ein Gewebe aus hochfesten Fasern eingebettet sein kann. Der der Öffnung 2a in der Manschette 2 benachbarte Bereich ist beiderseits von je einer Scheibe 3 aus wärmeisolierendem Material überdeckt. Die Scheiben 3 bestehen vorteilhafterweise aus asbestfreiem Fasermaterial. Zwei Metallscheiben 4 sind vorgesehen, um die empfindlichen Scheiben 3 beim Festschrauben einer Mutter 5 nicht zu zerstören bzw. zu beschädigen. Die Mutter 5 wird auf die Ventilhülse 1a aufgeschraubt. Mit 6 ist ein sogenannter Kanister bezeichnet, welcher um eine nicht dargestellte Spleißverbindung eines Kabels herumgelegt wird, um die Spleiße zu schützen und einen allmählichen Übergang von dem großen Durchmesser der Spleißverbindungsstelle zu dem kleineren Durchmesser der Kabel herzustellen. Der Kanister 6 weist eine Öffnung 6a auf, damit eine Verbindung vom Innenraum des Kanisters 6 nach außen möglich wird. Eine Scheibe 7 aus einem Heißschmelzkleber ist zwischen dem Anschlag 1b und der unteren Metallscheibe 4 vorgesehen.

Beim Erwärmen der Manschette 2, um diese zum Schrumpfen zu bringen, wird die Heißschmelzkleberscheibe 7 über die aus Metall bestehende Ventilhülse 1a soweit erwärmt, daß der Heißschmelzkleber verläuft und damit eine Abdichtung im Bereich der Öffnung 6a erzielt wird. Durch die Scheiben 3 aus wärmeisolierendem Material wird ein Schrumpfen der Randbereiche der Öffnung 2a in der Manschette 2 bewußt unterbunden. Die gestrichelten Linien verdeutlichen die Wanddickenzunahme der Manschette 2 infolge der Schrumpfung. Um ein Verschieben der Manschette 2 beim Wärmeschrumpfen bzw. beim Erkalten zu vermeiden, wird in die Ventilhülse 1a ein Dorn 8 eingeführt, der sich mit einem Ring 8a am oberen Ende der Ventilhülse 1a abstützt. Der Dornschaft 8b besitzt eine solche Länge, daß er nur über ein kurzes Stück in den Kanister 6 hineinragt. Der Dornschaft 8b kann auch mit einem Außengewinde versehen sein und in die Ventilhülse 1a eingeschraubt sein.

In der Figur 2 ist in die Ventilhülse 1a ein Rohr 9 eingesetzt, welches sich über ein Rohrbund 9a an der Oberkante der Ventilhülse 1a abstützt. Das Rohr 9 besitzt an seinem dem Rohrbund 9a entgegengesetzten Ende mehrere Schlitze 9b, so daß Zungen 9c zwischen den Schlitzen 9b entstehen. Die Zungen 9c sind nach außen geformt. Nach dem Einführen des Rohres 9 in die Ventilhülse 1a werden die Zungen 9c in der Öffnung 6a des Kanisters nach innen geformt und federn hinter der Öffnung 6a auseinander. Auf diese Weise sind das Ventil 1 und der Kanister 6 so verbunden, daß das Ventil 1 und damit die Öffnung 2a in der Manschette 2 mit der Öffnung 6a im Kanister 6 fluchten.

Anstelle des Rohres 9 kann auch in nicht dargestellter Weise ein an sich bekannter Spreizdorn verwendet werden, der in die Ventilhülse 1a eingeschoben wird und dessen Spreizkrallen hinter die Öffnung 6a greifen.

Nach dem Einführen des Dornes 8 bzw. des Rohres 9 und der Fixierung des Ventils 1 im Bereich der Öffnung 6a des Kanisters 6 wird die Manschette 2 durch eine weiche Flamme zum Schrumpfen gebracht und abgekühlt. Nach dem Abkühlen werden Dorn 8 bzw. Rohr 9 aus der Ventilhülse 1a herausgezogen und der nicht dargestellte Ventileinsatz in die Ventilhülse 1a eingeschraubt.

## Patentansprüche

1. Anordnung zum Umhüllen einer Spleißverbindung von elektrischen oder optischen Kabeln, bestehend aus einem die Spleißverbindung zu umgeben vermögenden Kanister (6), der mit einer Öffnung (6a) an seiner Umfangsfläche versehen ist sowie einer wärmeschrumpfbaren Manschette (2), die um den Kanister (6) herumzulegen ist und die eine Öffnung (2a) aufweist, in die ein eine Hülse (1a) und einen Anschlag (1b) aufweisendes Ventil (1) einzubauen ist, **dadurch gekennzeichnet**, daß ein Dorn (8,9) vorgesehen ist, der vor und während des Wärmeschrumpfens der Manschette (2) sowie während des Abkühlens der Manschette (2) zum Einführen in das Ventil (1), Hineinragen in die Öffnung (6a) im Kanister (6), Fluchtenlassen der Öffnung (2a) in der Manschette (2) mit der Öffnung im Kanister (6) und Entfernen aus dem Ventil (1) nach Abkühlen der Manschette (2) geeignet ist.

2. Anordnung nach Anspruch 1, dadurch gekennzeichnet, daß das Ventil (1) eine Ventilhülse (1a) mit Innen- und Außengewinde aufweist und der Dorn (8,9) sich mit einem Ansatz (8a,9a) auf dem nach außen weisenden Ende der Ventilhülse (1a) abstützt und bis in die Öffnung (6a) im Kanister (6) hineinragt.

3. Anordnung nach Anspruch 1 oder 2, dadurch gekennzeichnet, daß der Dorn (8,9) zumindest über eine bestimmte Länge ein Außengewinde aufweist und in Ventilhülse (1a) eingeschraubt ist.

4. Anordnung nach einem der Ansprüche 1 bis 3, dadurch gekennzeichnet, daß an dem dem Kanister (6) zugekehrten Ende des Dornes (9) Rasthaken (9c) vorgesehen sind, die hinter die Öffnung (6a) im Kanister (6) greifen.

5. Anordnung nach Anspruch 4, dadurch gekennzeichnet, daß der Dorn (8,9) zumindest an seinem dem Kanister (6) zugekehrten Ende als Rohr (9) ausgebildet ist, daß das Rohrende unter Bildung von Zungen (9c) geschlitzt ist, und daß die Enden der Zungen (9c) nach außen gebogen sind.

## Claims

1. Layout for the wrapping of a splice connection of electrical or optical cables, consisting of a canister (6) able to surround the splice connection, and provided with an aperture (6a) on its peripheral surface, together with a heat-shrinkable cuff (2), which is to be laid around the canister (6) and which has an aperture (2a), into which a valve (1) having a sleeve (1a) and a stop (1b) is to be incorporated, distinguished by the fact that a mandrel (8, 9) is provided for, which, before and during the heat shrinkage of the cuff (2) and during the cooling of the cuff (2) is suitable for insertion into the valve (1), projecting into the aperture (6a) in the canister (6), aligning the aperture (2a) in the cuff (2) with the aperture in the canister (6) and being removed from the valve (1) when the cuff (2) has cooled.

2. Layout as Claim 1, distinguished by the fact that the valve (1) has a valve sleeve (1a) with an internal thread and an external thread and the mandrel (8, 9) is supported by a lengthening piece (8a, 9a) on the end of the valve sleeve (1a) facing outwards and projects right into the aperture (6a) in the canister (6).

3. Layout as Claim 1 or 2, distinguished by the fact that the mandrel (8, 9) has an external thread, at least for a certain length, and is screwed into the valve sleeve (1a).

4. Layout as one of Claims 1 to 3, distinguished by the fact that locking hooks (9c) are provided for at the end of the mandrel (9) facing towards the canister (6), which engage behind the aperture (6a) in the canister (6).

5. Layout as Claim 4, distinguished by the fact that the mandrel (8, 9) takes the form of a tube (9), at least at the end facing towards the canister (6), that the tube end is slit, with the formation of teeth (9c), and that the ends of the teeth (9c) are bent outwards.

## Revendications

1. Dispositif destiné à gainer une jonction épissée entre des câbles électriques ou des câbles optiques, comprenant un barillet (6) qui doit envelopper la jonction épissée et dont la face périphérique est munie d'un orifice (6a), ainsi qu'une manchette (2) emmanchable à chaud, qui doit être posée autour du barillet (6) et qui est munie d'un orifice (2a), dans lequel on introduit une valve (1) qui comporte une douille (1a) et une butée (1b), caractérisé en ce qu'il est prévu un mandrin (8, 9) qui, avant et pendant l'emmanchement à chaud de la manchette (2), ainsi que pendant le refroidissement de la manchette (2), est introduit dans la valve (1), pénètre dans l'orifice (6a) du barillet (6), amène l'orifice (2a) de la manchette (2) en alignement avec l'orifice du barillet (6) et est retiré de la valve (1) à la fin du refroidissement de la manchette (2).

2. Dispositif selon la revendication 1, caractérisé en ce que la valve (1) comporte une douille de valve (1a) munie d'un taraudage et d'un filetage, et le mandrin (8, 9) vient en appui avec une saillie (8a, 9a) sur l'extrémité de la douille (1a) orientée vers l'extérieur et pénètre jusque dans l'orifice (6a) du barillet (6).

3. Dispositif selon la revendication 1 ou 2, caractérisé en ce que le mandrin (8, 9) comporte un filetage réalisé au moins sur une longueur déterminée et est vissé dans la douille (1a).

4. Dispositif selon l'une quelconque des revendications 1 à 3, caractérisé en ce qu'il est prévu de réaliser sur l'extrémité du mandrin (9) orientée vers le barillet (6) des crochets de retenue (9c), qui s'engagent derrière l'orifice (6a) du barillet (6).

5. Dispositif selon la revendication 4, caractérisé en ce que le mandrin (8, 9), au moins sur son extrémité orientée vers le barillet (6), est conçu en forme de tube (9), en ce que l'extrémité du tube est fendue en formant des languettes (9c), et en ce que les extrémités des languettes (9c) sont courbées vers l'extérieur.
